# EUROPÄISCHE PATENTSCHRIFT

(11) **EP 0 889 569 B1**
(45) Veröffentlichungstag und Bekanntmachung des Hinweises auf die Patenterteilung: **05.10.2005**
(21) Anmeldenummer: 98111110.7
(22) Anmeldetag: 17.06.1998
(51) Int. Cl.: H02H 3/04

(54) **Installationsschaltereinheit**
Installation switchgear unit
Unité d'Interruption d'installation

(30) Priorität: 30.06.1997 DE 19727733
(43) Veröffentlichungstag der Anmeldung: 07.01.1999
(73) Patentinhaber: ABB PATENT GmbH, 68526 Ladenburg (DE)
(72) Erfinder: Garrels, Kai, Dipl.-Ing., 68239 Mannheim (DE); Magin, Hermann, Dipl.-Ing., 67105 Schifferstadt (DE)
(74) Vertreter: Miller, Toivo

(56) Entgegenhaltungen:
- EP-A- 0 736 946
- US-A- 5 610 579
- US-A- 5 657 193
- BABB M: "MOTOR OVERLOAD PROTECTION BECOMES 'COMMUNICATIONS-CAPABLE'" CONTROL ENGINEERING INTERNATIONAL,US,CAHNERS PUBLISHING, Bd. 43, Nr. 8, 1. Juni 1996 (1996-06-01), Seiten 69-70,72, XP000621754 ISSN: 0010-8049

## Beschreibung

Die Erfindung betrifft ein Installationsgerät gemäß dem Oberbegriff des Anspruches 1.

Zum Schutz insbesondere eines Motors sind Installationsgeräte bekannt geworden, die eine Kurzschlußschutzfunktion, eine Überlastschutzfunktion und eine Schützfunktion aufweisen. Der Kurzschlußschutz wird durch einen Motorschutzschalter bewerkstelligt, der Überstromschutz durch ein thermisches Überlastrelais, welches mit dem Motorschutzschalter in Verbindung steht, und die Schützfunktion wird durch ein Schütz erzielt, mit dem die genannte Einheit ergänzt wird.

Ein Installationsgerät der Eingangs genannten Art ist aus der EP 0736 946 A1 bekannt geworden. Diese Druckschrift beschreibt ein Interface-Modul zwischen einem Feldbus und einer Steuer- und Schutzeinrichtung für einen Elektromotor. Dabei verarbeitet die Einheit Signale, die von Signalkontakten herkommen und überträgt diese auf einen Feldbus. Über die Stromversorgung des Moduls ist nichts ausgesagt.

Ebenso sagt die Literaturstelle Control Engineering/June !966, Seite 69 und ff. Insbesondere Seiten 72, linke Spalte, nicht über die Stromversorgung eines Installationsschaltgerätes der Eingangs genannten Art aus.

Aufgabe der Erfindung ist es, ein Installationsschaltgerät der eingangs genannten Art zu schaffen, welches auf einfache Weise mit Strom versorgt werden kann.

Diese Aufgabe wird erfindungsgemäß gelöst durch die kennzeichnenden Merkmale des Anspruches.

Erfindungsgemäß ist also die Baueinheit zur Stromversorgung mit einem Phasenleiter und einem Neutralleiter verbunden; mit diesen verbundene Leiterzüge sind durch die Baueinheit geschleift und mit der Schützspule verbunden, wobei über die Leiterzüge die Baueinheit mit Strom versorgt ist.

Dabei wird als Auswerteeinheit ein Mikroprozessor verwendet, dessen Ausgangssignale über einen Feldbus einer Zentrale zugeführt werden.

Weiterhin kann der Mikroprozessor einen Schaltkontakt ansteuern, mit dem die Spule des Schützes ansteuerbar ist.

Der Mikroprozessor ist also über eine Schnittstellenanordnung mit zum Anschließen eines Feldbusses vorgesehenen Anschlußklemmen verbunden, wobei über diese Anschlußklemmen einerseits Ausgangssignale des Mikroprozessors zur Zentrale und andererseits von der Zentrale Ansteuersignale für den Mikroprozessor zum Betätigen des Schaltkontaktes zuführbar sind.

Weitere vorteilhafte Ausgestaltungen und Verbesserungen der Erfindung sind den weiteren Unteransprüchen zu entnehmen.

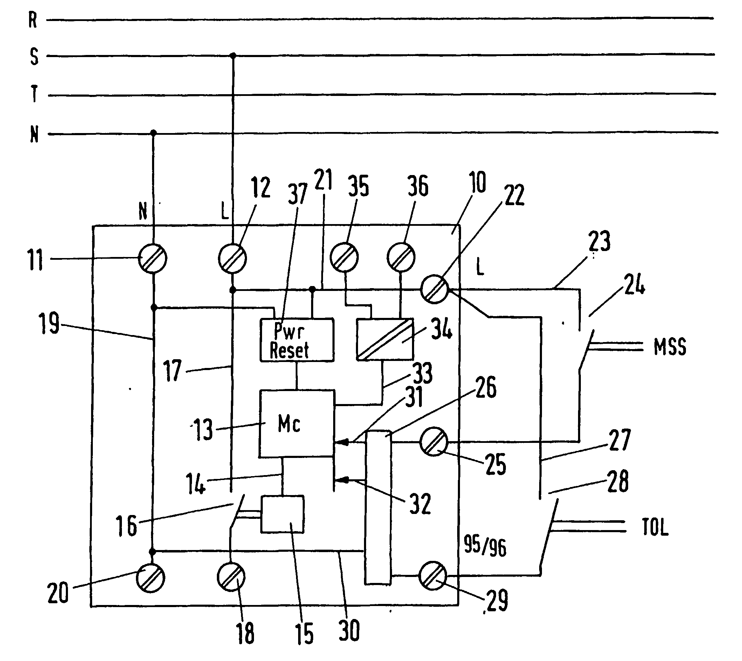

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.
Es zeigt die einzige Fig. eine schematische Schaltungsanordnung eines erfindungsgemäßen Bausteins.

Ein Netz, mit dem ein Elektromotor mit Strom versorgt wird, umfaßt drei Phasenleiter R, S, T sowie einen Neutralleiter N.

Diesem Netz ist ein Baustein 10 zugeordnet, der zwei Klemmen 11 und 12 aufweist, von denen die Klemme 11 mit dem Neutralleiter N und die Klemme 12 mit dem Phasenleiter S verbunden ist. Innerhalb des Bausteines 10 befindet sich ein Mikroprozessor oder Mikrocomputer 13, dessen einer Ausgang über eine Leitung 14 mit einem Auslöserelais 15 verbunden ist, das eine Kontaktstelle 16 öffnet, die in einer Verbindungsleitung 17 liegt, die an der Klemme 12 im Inneren des Bausteines 10 angeschlossen ist. Das andere Ende der Verbindungsleitung 17 ist auf eine weitere Klemme 18 geschaltet. An der Klemme 11 ist eine Verbindungsleitung 19 angeschlossen, deren anderes Ende mit einer Klemme 20 verbunden ist. Die Verbindungsleitung 17 ist über eine Leitung 21 mit einer Anschlußklemme 22 verbunden, an der ein Schaltkreis 23 mit einem Ende angeschlossen ist, der einen Signalkontakt 24 aufweist, der die Schaltstellung eines Motorschutzschalters MSS anzeigt. Das andere Ende des Leitungszuges ist auf eine Anschlußklemme 25 geschaltet, an der ein Verteilelement 26 angeschlossen ist. An der Klemme 22 ist ein weiterer Leitungszug 27 angeschlossen, in dem sich ein Signalkontakt 28 befindet, der die Schaltstellung eines thermischen Überstromrelais TOL signalisiert. Das andere Ende des Leitungszuges 27 ist an einer Klemme 29 angeschlossen, die mit der Einheit 26 verbunden ist. Mit einer Verbindungsleitung 30 schließt die Einheit 26 an dem Leitungszug 19 an und über Verbindungsleitungen 31 und 32 ist die Einheit 26 mit dem Mikroprozessor 13 verbunden. Eine Ausgangsleitung 33 des Mikroprozessors ist einer Schnittstelle 34 zugeführt, deren Ausgänge mit Klemmen 35 und 36 verbunden sind, an denen eine Busleitung anschließt. An der Verbindungsleitung 21 und an der Verbindungsleitung 19 ist ein sog. Power-Reset-Baustein 37 angeschlossen.

Wenn nun der Motorschutzschalter betätigt wird, dann wird über den Schalter 24 der Leitungszug 23 geschlossen, wodurch dem Mikroprozessor 13 ein Signal zugeführt wird, das in diesem verarbeitet und über den Busanschluß 35, 36 einer Zentrale zugeführt werden kann. Wenn das thermische Überstromrelais TOL anspricht, dann wird die Kontaktstelle 28 des Leitungszuges 27 geschlossen, so daß dem Mikroprozessor 13 ebenfalls Signale zugeführt werden, die über die Busleitung 35, 36 einer Zentrale gemeldet werden kann.

Über dem Busanschluß 35, 36 kann dem Mikroprozessor 13 z. B. von einer Zentrale ein Signal zugeführt werden, mit dem der Schalter 15 geschlossen werden kann, so daß ein an den Anschlußklemmen 20, 18 angeschlossene Schütz betätigt werden kann. An den Klemmen 20, 18 ist die Schützspule angeschlossen.

Dieser Baustein kann bespielsweise in einem üblichen Gehäuse untergebracht werden, das auf einer Hutprofilschiene aufgeschnappt werden kann.

Die Anschlußklemmen 11 und 12 dienen auch zur Stromversorgung des Bausteins 10.

## Patentansprüche

1. Installationsschaltereinheit mit einem Schütz, einem Motorschutzschalter (MSS), und/oder einem thermischen Überstromrelais (TOL), wobei dem Motorschutzschalter und/oder dem Überstromrelais i.e ein Signalkontakt (24,28) zugeordnet ist, mit dem der Schaltzustand des Motorschutzschalters bzw. des thermischen Überstromrelais detektierbar ist, und wobei durch die Signalkontakte erzeugte Signale in einer Auswerteeinheit auswertbar sind, so dass sie einer Zentrale zuführbar sind, welche Auswerteeinheit sich innerhalb einer Baueinheit (10) befindet und einen Mikroprozessor (13) enthält, dessen Ausgangssignale über einen Feldbus der Zentrale zugeführt werden, **dadurch gekennzeichnet, dass** die Baueinheit (10) zur Stromversorgung mit einem Phasenleiter (R, S, T) und einem Neutralleiter (N) verbunden ist, und dass mit diesen verbundene Leiterzüge (19, 17) durch die Baueinheit geschleift sind und mit der Schützspule verbindbar sind, wobei über die Leiterzüge die Baueinheit mit Strom versorgt ist.

2. Installationsschaltereinheit nach Anspruch 1, **dadurch gekennzeichnet, dass** der Mikroprozessor (13) einen Schaltkontakt (16) ansteuert, mit dem die Spule des Schützes ansteuerbar ist.

3. Installationseinheit nach einem der vorherigen Ansprüche, **dadurch gekennzeichnet, dass** der Mikroprozessor (13) über eine Schnittstellenanordnung (34) mit zum Anschließen eines Feldbusses vorgesehenen Anschlussklemmen (35, 36) verbunden ist, wobei über diese Anschlussklemmen einerseits Ausgangssignale des Mikroprozessors (13) zur Zentrale und andererseits von der Zentrale Ansteuersignale für den Mikroprozessor zum Betätigen des Schaltkontaktes (16) zuführbar sind.

4. Installationseinheit nach Anspruch 1, **dadurch gekennzeichnet, dass** in dem mit dem Phasenleiter verbundenen Leitungszug (17) der Schaltkontakt (16) untergebracht ist.

5. Installationseinheit nach einem der vorherigen Ansprüche, **dadurch gekennzeichnet, daß** weitere Leiterzüge (23, 27) für die Signalkontakte (24, 28) jeweils mit den Leiterzügen (17, 19) zu den Phasen- und Neutralleitern verbunden sind.

6. Installationseinheit nach Anspruch 5, **dadurch gekennzeichnet, dass** die Signalkontakte (24, 28) als Signalschalter ausgebildet sind, die an die Baueinheit (10) anreihbar sind und deren Eingangs- und Ausgangsklemmen mit entsprechenden Ein- und Ausgangsklemmen (22,25,29) an der Baueinheit verbunden sind.

7. Installationseinheit nach einem der vorherigen Ansprüche, **dadurch gekennzeichnet, dass** die Baueinheit (10) in einem Gehäuse untergebracht ist, das auf eine Hutprofiltragschiene aufschnappbar ist.

## Claims

1. An installation switch unit, comprising a contactor, a protective motor switch (MSS), and /or a thermal overcurrent relay (TOL), with a signal contact (24, 28) each being associated with the protective motor switch and/or the overcurrent relay, with which the switching state of the protective motor switch or the thermal overcurrent relay can be detected, and with signals generated by the signal contacts that can be evaluated in an evaluating unit, so that they can be supplied to a central unit, which evaluating unit is situated within a modular unit (10) and comprises a microprocessor (13) whose output signals are supplied to the central unit via a field bus, **characterized in that** the modular unit (10) is connected for power supply with a phase conductor (R, S, T) and a neutral conductor (N), and that conducting tracks (19, 17) which are connected with the same are looped through the modular unit and can be connected with the contactor coil, with the modular unit being supplied with power via the conductor tracks.

2. An installation switch unit according to claim 1, **characterized in that** the microprocessor (13) triggers a switching contact (16) with which the coil of the contactor can be triggered.

3. An installation unit according to one of the preceding claims, **characterized in that** the microprocessor (13) is connected via an interface arrangement (34) with connecting terminals (35, 36) provided for connecting a field bus, with output signals of the microprocessor (13) being supplied via these connecting terminals on the one hand and triggering signals for the microprocessor from the central unit for actuating the switching contact (16) on the other hand.

4. An installation unit according to claim 1, **characterized in that** the switching contact (16) is housed in the cable run (17) connected with the phase conductor.

5. An installation unit according to one of the preceding claims, **characterized in that** the further conductor tracks (23, 27) for the signal contacts (24, 28) are each connected with the conductor tracks (17, 19) to the phase and neutral conductors.

6. An installation unit according to claim 5, **characterized in that** the signal contacts (24, 28) are configured as signal switches which can be attached to the modular unit (10) and whose input and output terminals are connected with respective input and output terminals (22, 25, 29) with the modular unit.

7. An installation unit according to one of the preceding claims, **characterized in that** the modular unit (10) is housed in a housing which can be latched onto a top-hat rail.

## Revendications

1. Unité d'interruption d'installation comportant un contacteur électromagnétique, un disjoncteur de protection de moteur (MSS) et/ou un relais thermique de surintensité (TOL), un contact de signal (24, 28), à l'aide duquel l'état de commutation du disjoncteur de protection de moteur (MSS) ou du relais thermique de surintensité (TOL) peut être détecté, étant associé au disjoncteur de protection de moteur (MSS) ou au relais thermique de surintensité (TOL), et les signaux produits par les contacts de signal étant traités dans une unité de traitement en vue de leur transmission à une centrale, l'unité de traitement étant disposée à l'intérieur d'un module (10) et comprenant un microprocesseur (13) dont les signaux de sortie sont transmis à la centrale par l'intermédiaire d'un bus de champ, **caractérisée par le fait que** le module (10) pour son alimentation en courant est relié à un conducteur de phase (R, S, T) et à un conducteur de neutre (N) et **par le fait que** des branches de ligne (19, 17) reliées à ceux-ci passent dans le module et peuvent être connectées à la bobine de contacteur électromagnétique, le module étant alimenté en courant électrique par le biais desdites branches de ligne.

2. Unité d'interruption d'installation selon la revendication 1, **caractérisée par le fait que** le microprocesseur (13) commande un contact de commutation (16) par lequel la bobine du contacteur électromagnétique peut être commandée.

3. Unité d'interruption d'installation selon une des revendications précédentes; **caractérisée par le fait que** le microprocesseur (13) est rélié par l'intermédiaire d'un système d'interface (34) à des bornes de connexion (35, 36) prévues pour la connexion d'un bus de champ, d'une part des signaux de sortie du microprocesseur (13) pouvant être envoyés à la centrale et d'autre part des signaux de commande pouvant être envoyés par la centrale au microprocesseur à des fins d'actionnement du contact de commutation (16), par l'intermédiaire de ces bornes de connexion.

4. Unité d'interruption d'installation selon la revendication 1, **caractérisée par le fait que** le contact de commutation (16) est placé dans la branche de ligne (17) reliée au conducteur de phase.

5. Unité d'interruption d'installation selon une des revendications précédentes, **caractérisée par le fait que** des branches de ligne (23, 27) supplémentaires pour les contacts de signal (24, 28) sont reliées aux branches de ligne (17, 19) menant aux conducteurs de phase et de neutre.

6. Unité d'interruption d'installation selon la revendication 5, **caractérisée par le fait que** les contacts de signal sont agencés en commutateurs de signal qui peuvent être ajoutés au module (10) et dont les bornes d'entrée et de sortie sont reliées à des bornes d'entrée et de sortie 22, 25, 23) correspondantes dudit module.

7. Unité d'interruption d'installation selon une des revendications précédentes, **caractérisée par le fait que** le module (10) est logé dans un boîtier qui peut être encliqueté sur un rail-support à profil en chapeau.
